# EUROPÄISCHE PATENTANMELDUNG

(11) **EP 1 176 488 A2**
(43) Veröffentlichungstag der Anmeldung: **30.01.2002**
(21) Anmeldenummer: 01116288.0
(22) Anmeldetag: 05.07.2001
(51) Int. Cl.: G05D 23/02

(54) **Thermostat-Ventil**

(30) Priorität: 26.07.2000 DE 20012903 U
(71) Anmelder: Conecterm GmbH, 33154 Salzkotten (DE)
(72) Erfinder: Kersting, Werner, 59558 Lippstadt (DE)
(74) Vertreter: Dörner, Lothar, Dipl.-Ing.

(57) **Zusammenfassung**

Die Erfindung betrifft ein Thermostat-Ventil mit einem Oberteil (2), in dem ein Fühlerstift (3) geführt ist, einem Haltekopf (4) und einem Druckstück (5). Das Druckstück (5) liegt einerseits an dem Fühlerstift (3), andererseits an einem Thermostaten (6) an. Der Thermostat (6) ist von einer Handradkappe (7) umgeben. Das Oberteil (2) besteht aus mindestens zwei Teilen (21, 22) und mindestens ein Teil besteht aus Kunststoff.

## Beschreibung

Die Erfindung betrifft ein Thermostat-Ventil mit einem Oberteil, in dem ein Fühlerstift geführt ist, einem Haltekopf und einem Druckstück, das einerseits an dem Fühlerstift andererseits an einem Thermostaten anliegt, wobei der Thermostat von einer Handradkappe umgeben ist.

Thermostat-Ventile bewirken die automatische Temperaturregelung von Raumheizkörpern. Sie enthalten aus diesem Grund einen vorzugsweise als Dehnstoffelement ausgebildeten Thermostaten, der auf ein Verschlußelement des Ventils einwirkt und diese drosselt, schließt oder öffnet. Das Einstellen dieser thermostatisch gesteuerten Ventile erfolgt durch Drehen einer Handradkappe, die einen Einstellkörper in seiner Lage zum Ventil verstellt.

Thermostat-Ventile der eingangsgenannten Art sind an sich bekannt (vgl. DE-GM 80 20 318). Bei den bekannten Thermostat-Ventilen ist das Oberteil im Wesentlichen aus einem Teil gebildet und besteht aus Messing. Um allen Erfordernissen gerecht zu werden, sind die Oberteile mit einer Vielzahl von Absätzen oder Stufen versehen. Da für die Oberteile ein hohe Passgenauigkeit gerfordert wird, sind die Herstellkosten aufgrund der vielen Bearbeitungsschritte hoch. Zudem haben die bei den bekannten Oberteilen verwendten Werkstoffe eine gute Wärmeleitfähigkeit, was zum Teil zu einer Verfälschung der vom Thermostaten wahrgenommenen Temperaturen führt, wodurch die mit den Thermostat-Ventilen gewünschte automatische Heizregelung negativ beeinflusst werden kann.

Hier will die Erfindung Abhilfe schaffen. Der Erfindung liegt die Aufgabe zugrunde, ein Thermostat-Ventil zu schaffen, bei dem der Aufwand bei der Herstellung des Oberteils reduziert ist und darüber hinaus die Beeinflussung der Heizregelung durch die Wärmeleitfähigkeit der verwendeten Materialien reduziert ist. Gemäß der Erfindung wird diese Aufgabe dadurch gelöst, dass das Oberteil aus mindestens zwei Teilen besteht, und dass mindestens ein Teil aus Kunststoff besteht.

Mit der Erfindung ist ein Thermostat-Ventil geschaffen, bei dem der Aufwand bei der Herstellung des Oberteils reduziert ist. Durch die wenigstens teilweise Herstellung des Oberteils aus Kunststoff können die erforderlichen Passgenauigkeiten bereits in den Werkzeugen zur Herstellung des Oberteils vorgesehen werden, so dass der erforderliche Aufwand nur einmal zu betreiben ist. Dadurch sind die Kosten deutlich reduziert. Darüber hinaus ist die Beeinflussung der Heizregelung durch die Wärmeleitfähigkeit der verwendeten Materialien verringert, da die Wärmeleitfähigkeit von Kunststoff unter der von Messing liegt.

In Ausgestaltung der Erfindung ist der Kunststoff glasfaser-verstärkt. Durch die Verwendung von glasfaser-verstärktem Kunststoff ist die Stabilität des Oberteils hoch. Durch Erhöhung des Anteils an Glasfasern im verwendeten Kunststoff lässt sich zudem die Stabilität problemlos und nahezu stufenlos erhöhen.

Das in der Heizung geführte Wasser kann auf Grund chemischer Verbindungen, die aus dem Kontakt mit Kupferrohren, dem Heizkörper aus Aluminium oder der gleichen resultieren, aggressiv sein. Der Kontakt mit dem aggressiven Heizungswasser könnte den Kunststoff angreifen. Daher ist in Weiterbildung der Erfindung ein Teil des Oberteils von einem Dichtteller gebildet, der aus Metall besteht. Der Dichtteller schirmt das übrige Oberteil gegen das Heizungswasser ab.

In anderer Weiterbildung der Erfindung ist in dem Oberteil innen eine Wulst ausgebildet. Von der Wulst ist ein O-Ring aufgenommen und in dieser gehalten. Im Vergleich zu den bekannten Thermostat-Ventilen kann aufgrund dieser Ausbildung auf die Anbringung zusätzlicher Haltescheiben verzichtet werden.

In bevorzugter Weiterbildung der Erfindung ist ein Ventilteller durch Einbördeln an dem Fühlerstift befestigt. Dadurch sind Dichtteller mit Fühlerstift und Ventilteller als Funktionsbaugruppe mit Rückholfeder herstellbar. Die Herstellung ist dadurch insbesondere wegen der daraus resultierenden einfacheren Montage kostengünstiger.

Vorteilhaft ist an dem Fühlerstift ein Ventilteller befestigt, der bevorzugt eine Formdichtung trägt. Mit Hilfe dieser Art der Abdichtung ist eine freie Wahl der Form der Dichtung selbst möglich, so dass die äußere Form der Dichtung auf den jeweiligen Ventilsitz abgestimmt werden kann und innen auf die Gegebenheiten an dem Fühlerstift.

Andere Ausgestaltungen und Weiterbildungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Figur 1: einen Schnitt durch ein Thermostat-Ventil mit Ventil-Gehäuse und
- Figur 2: teilweise in Ansicht, teilweise im Axialschnitt das in Figur 1 dargestellte Ventil-Gehäuse mit Oberteil und Fühlerstift in vergrößerter Darstellung.

Das als Ausführungsbeispiel gewählte Thermostat-Ventil ist an ein Ventil-Gehäuse 1 angebaut, in dem ein Oberteil 2 gehalten ist. In dem Oberteil 2 ist ein Fühlerstift 3 geführt. An dem Gehäuse 1 ist ein Haltekopf 4 der Art befestigt, das ein Druckstück 5 an dem Fühlerstift 3 anliegt. Das Druckstück 5 liegt andererseits an einem Thermostaten 6 an. Der Thermostat 6 ist von einer Handradkappe 7 umgeben, welche mit dem Haltekopf 4 an dem Gehäuse 1 befestigt ist.

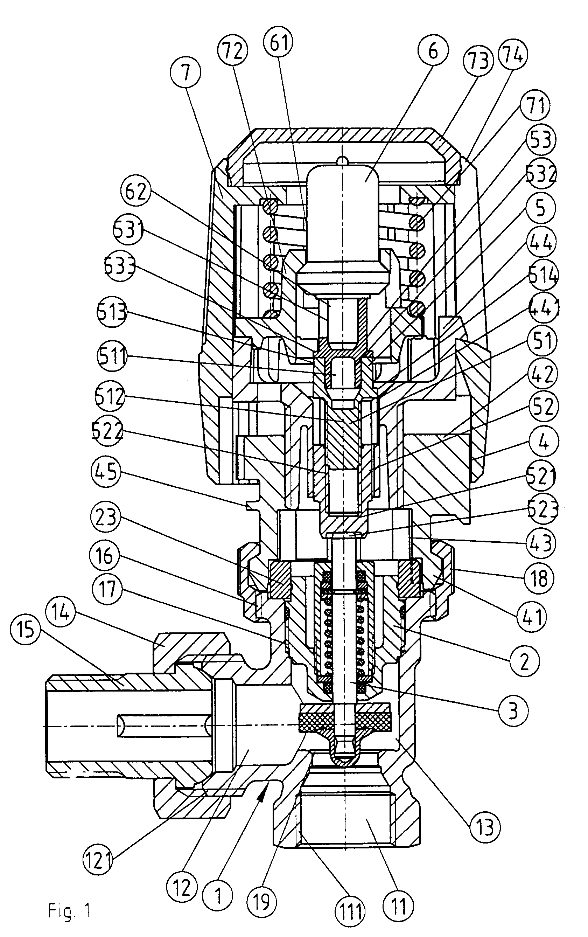

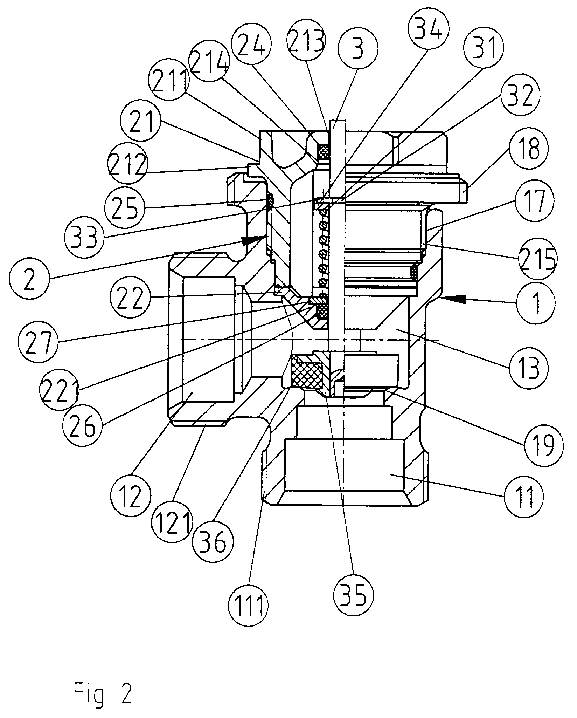

Das Ventil-Gehäuse 1 ist mit einem Ventileinlass 11, einem rechtwinklig zum Ventileinlass 11 verlaufenden Ventilauslass 12 und einer koaxial zu dem Ventileinlass 11 vorgesehenen Bohrung 13 versehen. Der Ventileinlass 11 weist ein Gewinde 111 zum Anschluss an eine Heizleitung auf. Im Ausführungsbeispiel nach Figur 1 handelt es sich ume ein Innengewinde, im Ausführungsbeispiel nach Figur 2 um ein Aussengewinde. Zur Verbindung mit einem - nicht dargestellten - Heizkörper weist der Ventilauslass 12 ein Aussengewinde 121 auf, auf das eine Überwurfmutter 14 geschraubt ist, mit deren Hilfe ein zum Heizkörper führendes Rohr 15 an dem Ventil-Gehäuse 1 befestigt ist. An seinem dem Thermostat-Ventil zugewandten Ende ist das Ventil-Gehäuse 1 aussen mit einem Außengewinde 16 und innen mit einem Innengewinde 17 versehen. Auf das Außengewinde 16 ist eine Überwurfmutter 18 geschraubt. Im Innern das Ventil-Gehäuse 1 bildet den Abschluss des Ventileinlasses 11 ein Ventilsitz 19.

Der Haltekopf 4 ist in seinem dem Ventil-Gehäuse 1 zugewandten Bereich zu einem Bund 41 ausgeweitet, der von der Überwurfmutter 18 umgriffen ist. Am entgegengesetzten Ende des Haltekopfes 4 ist außen ein Anschlag 42 vorgesehen, der die Drehbewegung der Handradkappe 7 begrenzt. Auf dem Umfang des Haltekopfes 4 ist ein Ringflansch 45 angeordnet. In ein Innengewinde 43 des Haltekopfs 4 ist ein Regulierstück 44 geschraubt. Im Innern des Regulierstücks 44 ist der Thermostat 6 gehalten und geführt. Außerdem ist das Regulierstück 44 an der Handradkappe 7 befestigt. Mit Hilfe des Regulierstücks 44 ist der Temperaturbereich, in dem das Thermostat-Ventil arbeiten soll, verstellbar. Im übrigen erfolgt die Verstellung des Fühlerstiftes 3 mit Hilfe des Thermostaten 6.

Im Ausführungsbeispiel ist der Thermostat 6 als Feststoffthermostat ausgebildet. Dieser Feststoffthermostat enthält in einem Metallgehäuse 61 eine sich in Abhängigkeit von der Temperatur in ihrem Volumen verändernde Flüssigkeit. Je nach der Temperatur wird so ein an der unteren Stirnseite des Feststoffthermostaten austretendes Formendstück 62 in Axialrichtung verstellt. Das Formendstück 62 greift in das Druckstück 5 ein.

Das Druckstück 5 ist in drei Teile aufgeteilt. Den ersten stellt ein Druckstößel 51 dar. Der Druckstößel 51 weist an seinem einen Ende eine Sackbohrung 511 auf, an seinem anderen Ende ist er in Form eines Schraubbolzens 512 ausgebildet. An dem Druckstößel 51 ist außen ein Rand 513 vorgesehen. Der zweite Teil besteht aus einer Verstellung 52, die in Form einer mit einem Boden 521 und einem Innengewinde 522 versehenen Hülse ausgebildet ist. An der Außenfläche des Boden 521 liegt der Fühlerstift 3 an. Hierzu ist der Boden 521 der Verstellung 52 außen nach Art eines mit einem Schlitz 523 versehenen Schraubenkopfes ausgebildet, der mittig eine Ausnehmung für die Anlage des Fühlerstiftes 3 aufweist. Der dritte Teil ist durch ein Zwischenstück 53 gebildet. Das Zwischenstück 53 weist an seinem einen Ende eine Sackbohrung 531 für die Aufnahme des Formendstücks 62 auf. An seinem anderen Ende ist das Zwischenstück 53 in Form einer Hülse 532 ausgebildet. Die Hülse 532 ist von der Sackbohrung 511 des Druckstößels 51 aufgenommen. Das Zwischenstück 53 liegt mit einem Bund 533 an der dem Thermostaten 6 zugewandten Stirnseite des Druckstößels an. An dem Rand 513 sind radial verlaufende Vorsprünge 514 vorgesehen. Die Vorsprünge 514 sind in Nuten 441 des Regulierstücks 44 geführt.

Die Verstellung der gewünschten Raumtemperatur ausgehend von der eingestellten Solltemperatur erfolgt über die Handradkappe 7. Die Handradkappe 7 ist an dem Regulierstück 44 befestigt. Beim Drehen der Handradkappe 7 dreht sich auch das Regulierstück 44. Der Thermostat 6 ist im Innern der Handradkappe 7 von einer Sicherheitsfeder 71 gehalten. Die Handradkappe 7 ist in Längsrichtung mit Öffnungen 74 für den Durchtritt der Raumluft versehen, so dass der Thermostat 6 die Temperatur des Raumes annehmen kann. Die Zentrierung des Thermostaten 6 erfolgt über eine Federhülse 72, die liegt unter dem Einfluss der Feder 71 steht. Die Federhülse 72 weist innen eine Führung auf und stützt sich auf dem Regulierstück 44 abstützt. An dem freien Ende der Handradkappe 7 ist eine Anzeigeplatte 73 vorgesehen, auf der die Stellung des Handrades angezeigt wird.

Das Oberteil 2 besteht im Wesentlichen aus zwei Teilen. Es besteht aus einem Ventileinsatz 21, der an seinem dem Thermostat-Ventil abgewandten Ende mit einem Dichtteller 22 in Verbindung steht. Der Ventileinsatz 21 ist aus Kuststoff hergestellt; im Ausführungsbeispiel aus GFN 2, einem glasfaser-verstärktem Kunststoff. Der Dichtteller 22 besteht im Ausführungsbeispiel aus Metall und schirmt den Ventileinsatz 21 gegen das Heizungsmedium ab. Der Ventileinsatz 21 weist auf seiner dem Thermostat-Ventil zugewandten Seite einen ringförmigen Ansatz 211 auf, an den sich aussen ein Flansch 212 anschließt. An dem Flansch 212 und der Aussenseite des Ansatzes 211 liegt ein Zentrierring 23 an, der sich mit seiner Aussenseite an dem Bund 41 abstützt. Im Bereich des ringförmigen Ansatzes 211 verjüngt sich der Ventileinsatz 21 und mündet in einer Bohrung 213, durch die der Fühlerstift 3 in das Oberteil 2 eintritt. Innen ist im Bereich der Verjüngung eine Wulst 214 ausgebildet, die einen O-Ring 24 aufnimmt. Im Anschluss an den Flansch 212 weist der Ventileinsatz 21 eine hülsenartige Form auf. Aussen ist dabei ein O-Ring 25 vorgesehen, der den Ventileinsatz 21 und damit das Oberteil 2 gegen das Ventil-Gehäuse 1 abdichtet. Im Anschluss an den O-Ring 25 ist an dem Ventileinsatz ein Aussengewinde 215 vorgesehen, mit dem das Oberteil 2 in das Innengewinde 17 des Ventil-Gehäuses 1 geschraubt ist. Der Dichtteller 22 ist insgesamt napfartig ausgebildet. Sein Boden weist eine Stufenbohrung 221 auf. Durch die Stufe mit geringstem Durchmesser ist der Fühlerstift 3 geführt. Zur Abdichtung gegenüber dem Innenraum des Oberteils 2 ist in der Stufe mit dem nächstgrößeren Durchmesser ein O-Ring 26 angeordnet. Der O-Ring 26 ist durch eine Scheibe 27 in dem Dichtteller 22 gehalten, wobei sich die Scheibe 27 in einer Stufe der Sufenbohrung 221 abstützt. Der Dichtteller 22 mit O-Ring 26 und Haltescheibe 27 sind als Einheit vormontiert. Aussen stützt sich der Dichtteller auf einem Absatz im Ventil-Gehäuse 1 ab.

Der Fühlerstift 3 durchsetzt das Oberteil 2. Im Bereich des Oberteils 2 ist der Fühlerstift 3 von einer Rückholfeder 31 umgeben. Der Fühlerstift 3 weist eine Ringnut 32 auf, in der eine Sicherungsscheibe 33 einliegt. Auf der der Rückholfeder 31 zugewandten Seite ist an der Sicherungsscheibe 33 eine Ansatzscheibe 34 angeordnet. Die Rückholfeder 31 ist einerseits an der Ansatzscheibe 34, andererseits auf der Scheibe 27 abgestützt. An dem über den Dichtteller 22 des Oberteils 2 nach aussen vorstehenden Teil ist an dem Fühlerstift 3 ein Ventilteller 35 befestigt. Die Befestigung des Ventiltellers 35 auf dem Fühlerstift 3 erfolgt durch Einbördeln. Dadurch sind der Dichtteller 22 mit Fühlerstift 3 und Ventilteller 35 als Funktionsbaugruppe inklusive der Rückholfeder 31 herstellbar. Dadurch und durch die Gewindekombination 17/215 sind Oberteil 2 und Fühlerstift 3 zu einer Baugruppe "Ventilmechanik" zusammengefasst und als Kombi-Ventileinsatz gehalten. Der Ventilteller 35 trägt eine Formdichtung 36. Im Zusammenwirken mit dem im Ventil-Gehäuse 1 vorgesehenen Ventilsitz 18 bestimmt die Formdichtung 36 den einstellbaren Strömungsquerschnitt des Ventils.

## Patentansprüche

1. Thermostat-Ventil mit einem Oberteil, in dem ein Fühlerstift geführt ist, einem Haltekopf und einem Druckstück, das einerseits an dem Fühlerstift andererseits an einem Thermostaten anliegt, wobei der Thermostat von einer Handradkappe umgeben ist, **dadurch gekennzeichnet, dass** das Oberteil (2) aus mindestens zwei Teilen (21, 22) besteht, und dass mindestens ein Teil aus Kunststoff besteht.

2. Thermostat-Ventil nach Anspruch 1, **dadurch gekennzeichnet, dass** der Kunststoff glasfaser-verstärkt ist.

3. Thermostat-Ventil nach Anspruch 1 oder 2, **dadurch gekennzeichnet, dass** das Teil (22) von einem Dichtteller gebildet ist, der aus Metall besteht.

4. Thermostat-Ventil nach Anspruch 1 bis 3, **dadurch gekennzeichnet, dass** in dem Oberteil (2) innen eine Wulst (214) ausgebildet ist.

5. Thermostat-Ventil nach einem der Ansprüche 1 bis 4, **dadurch gekennzeichnet, dass** an dem Fühlerstift (3) ein Ventilteller (35) befestigt ist.

6. Thermostat-Ventil nach Anspruch 5, **dadurch gekennzeichnet, dass** der Ventilteller (35) durch Einbördeln an dem Fühlerstift (3) befestigt ist.

7. Thermostat-Ventil nach Anspruch 6, **dadurch gekennzeichnet, dass** der Ventilteller (35) eine Formdichtung (36) trägt.
